# EUROPEAN PATENT APPLICATION

(11) **EP 1 555 560 A1**
(43) Date of publication of application: **20.07.2005**
(21) Application number: 05250204.4
(22) Date of filing: 17.01.2005
(51) Int. Cl.: G02B 15/10, G02B 15/12, G03B 17/14

(54) **Conversion lens**

(30) Priority: 19.01.2004 JP 2004010725
(71) Applicant: Sony Corporation, Tokyo (JP)
(72) Inventor: Segawa, Yoshio c/o Sony Corporation, Tokyo (JP); Yamada, Yukio c/o Sona Corporatin, Shinagawa-ku tOKYO (JP)
(74) Representative: Nicholls, Michael John

(57) **Abstract**

A conversion lens apparatus includes a first and second barrels for housing a first and second lenses, wherein a back portion of the first barrel is detachably attached to the main body side barrel, a back portion of the second barrel is detachably attached to a front portion of the first barrel, the first barrel is configured, so a magnification rate of total optical system including the first lens and imaging optical system is converted to be more wide-angle side than magnification rate of the imaging optical system itself, when attached to the main body side barrel, and the second barrel is configured, so the magnification rate of total optical system including the first lens and imaging optical system is converted to be more telescopic side than magnification rate of the imaging optical system itself, when attached to the first barrel which is attached to the main body side barrel.

## Description

### CROSS REFERENCE TO RELATED APPLICATION

This application claims priority from Japanese Priority Document No. 2004-010725, filed on Jan. 19, 2004 with the Japanese Patent Office, which document is hereby incorporated by reference.

### BACKGROUND OF THE INVENTION

### 1. Field of the Invention

This invention relates to a conversion lens apparatus to be detachably attached to an imaging apparatus.

### 2. Description of Related Art

In an imaging apparatus such as a digital still camera, a video camera, and the like, a conversion lens apparatus to be detachably attached to a main body side lens barrel where an imaging optical system is assembled has been proposed.

Conventionally, it is common that a wide-angle conversion lens apparatus and a telescopic conversion lens apparatus are individually proposed, wherein the wide-angle conversion lens apparatus changes a total magnification rate obtained by combining the optical system of the conversion lens apparatus and the imaging optical system to a wide-angle side, and the telescopic conversion lens apparatus changes a total magnification rate obtained by combining the optical system of the conversion lens apparatus and the imaging optical system to a telescopic side when respective conversion lens apparatus is attached to the main body side lens barrel.

Accordingly, when shooting while changing the magnification rate between a wide-angle side and a telescopic side, after one of the conversion lens apparatuses is removed from the main body side lens barrel, the other conversion lens apparatus has to be attached to the main body side lens barrel. Accordingly, if it is necessary to frequently change the magnification rates between the wide-angle side and the telescopic side, this becomes a tiresome work.

In order to overcome the above defect, a Japanese Laid-Open Patent Application PH7-64164 discloses a wide angle and telescopic compatible conversion lens apparatus wherein a wide-angle lens and a telephoto lens are assembled in one conversion lens apparatus, and a wide-angle side and a telescopic side are changed by changing a way to attach the conversion lens apparatus to the main body side lens barrel.

### SUMMARY OF THE INVENTION

However, the above mentioned wide-angle and telescopic compatible conversion lens apparatus is used by always combining the wide-angle lens and the telephoto lens, so that the magnification rate of the wide-angle side is limited to around 0.7, and the magnification rate of the telescopic side is limited to around 1.4 due to an optical design restriction. That is, it was difficult to design the magnification rate of the wide-angle side to be less than 0.7, and to design the magnification rate of the telescopic side to be more than 1.4.

A conversion lens apparatus of the present invention is able to overcome the above defects, and is able to secure a freedom in the magnification rate setting at both a wide-angle side and a telescopic side for performing an easy handling of the conversion lens apparatus.

A conversion lens apparatus according to a first embodiment of the present invention is such conversion lens apparatus that is detachably attached to a main body side lens barrel to which an imaging optical system of an imaging apparatus for shooting an object is assembled, in which the conversion lens apparatus includes a first lens barrel for housing a first lens, and a second lens barrel for housing a second lens, wherein a back portion of the first lens barrel is detachably attached to the main body side lens barrel, a back portion of the second lens barrel is detachably attached to a front portion of the first lens barrel, the first lens barrel is configured so that a magnification rate of a total optical system including the first lens and the imaging optical system is converted to be more wide-angle side than a magnification rate of the imaging optical system itself, when attached to the front portion of the main body side lens barrel, and the second lens barrel is configured so that the magnification rate of the total optical system including the first lens and the imaging optical system is converted to be more telescopic side than a magnification rate of the imaging optical system itself, when attached to the front portion of the first lens barrel which is attached to the front portion of the main body side lens barrel.

According to the present invention, it is possible to perform the change of the magnification rate in the imaging optical system between the wide-angle side and the telescopic side by attaching or detaching the second lens barrel itself to the first lens barrel which is attached to the imaging apparatus, and accordingly, it becomes very simple and convenient when the change of the magnification rates in the imaging optical system between the wide-angle side and the telescopic side is frequently required. Further, the two lens barrels including the first lens barrel and the second lens barrel are provided, so that it is possible to have less restriction upon an optical designing, and is possible to set the magnification rates of the wide-angle side and the magnification rate of the telescopic side to be desired values.

### BRIEF DESCRIPTION OF THE DRAWINGS

Fig. 1 is a perspective view of an imaging apparatus seen from a front side, wherein a first embodiment of a conversion lens apparatus according to the present invention is attached to the imaging apparatus;
Fig. 2 is a perspective view of the imaging apparatus seen from the front side, wherein a first lens barrel is attached to the imaging apparatus;
Fig. 3 is a perspective view of the imaging apparatus seen from the front side, wherein the first lens barrel and a second lens barrel are attached to the imaging apparatus;
Fig. 4 is a block diagram in the first embodiment of the conversion lens apparatus;
Fig. 5 is an assembly diagram in the first embodiment of the conversion lens;
Fig. 6 is a plan view for showing a back portion of the first lens barrel in the conversion lens apparatus;
Fig. 7 is a plan view for showing a back portion of the second lens barrel in the conversion lens apparatus; and
Fig. 8 is a chart for describing how to use the conversion lens apparatus in the first embodiment of the present invention.

### DESCRIPTION OF THE PREFERRED EMBODIMENTS

This invention is able to secure a freedom of setting for magnification rates of a conversion lens system at a wide-angle side and a telescopic side, and performs an easy handling by detachably attaching a second lens barrel to a first lens barrel.

Now, a first embodiment of the present invention is described with reference to the attached drawings.

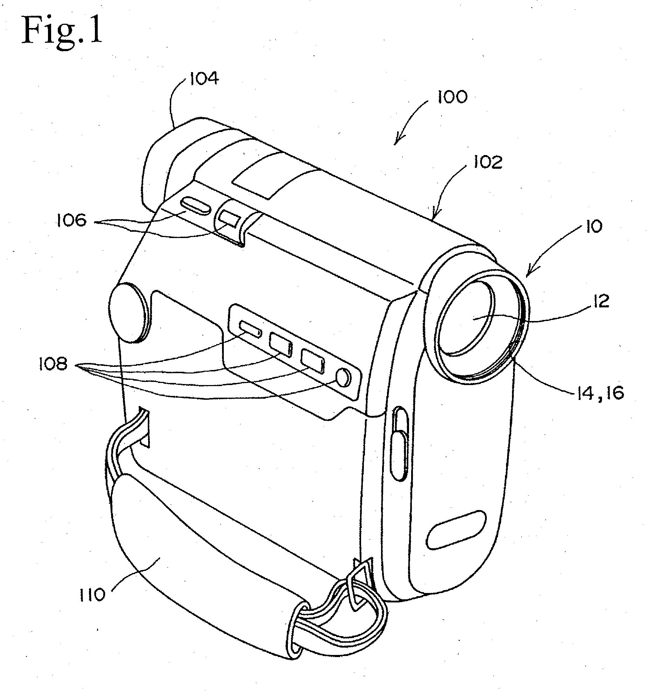

Firstly, an imaging apparatus to which a conversion lens apparatus is attached is described. As shown in Fig. 1, an imaging apparatus 100 is a video camera, for example, and includes a rectangular shaped case 102 which forms an exterior of the imaging apparatus 100. In the description in this specification, left and right are defined when the imaging apparatus 100 is viewed from a front side, and the front side is an object side of an optical system on an optical axis and a back side is an imaging device side of the an optical system.

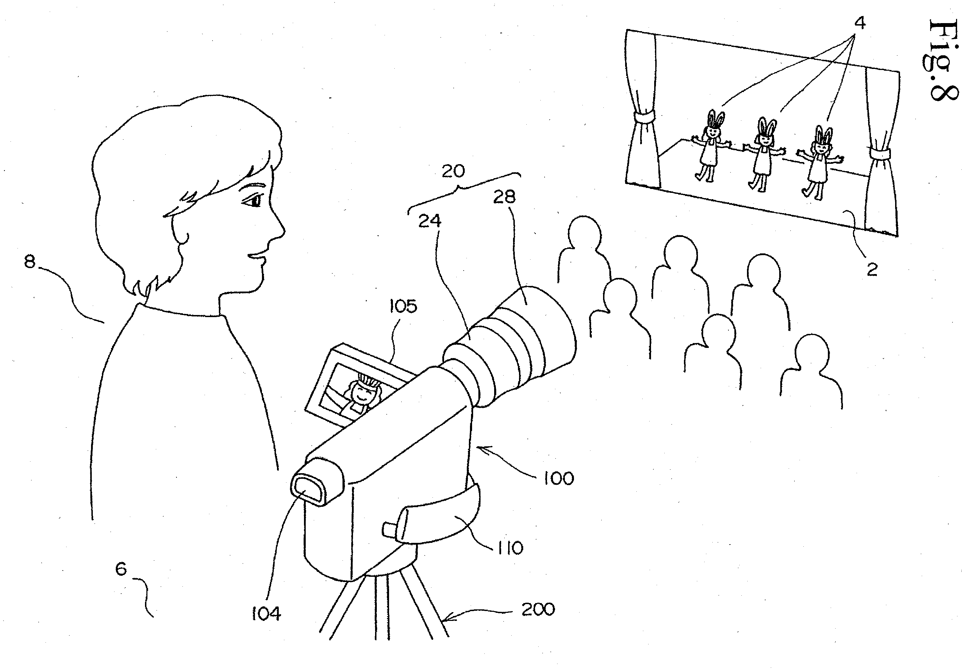

At a front upper portion of the case 102, a main body side barrel 10 having an imaging optical system 12 assembled while directing to a front is provided. In side of the case 102, an imaging device for taking an object image incident through the imaging optical system 12, a recording/reproducing unit for recording/reproducing still pictures or moving pictures of the object image taken by the imaging device, and the like are housed. Further, at a rear upper portion of the case 102, an electronic viewfinder 104 for monitoring the object image taken by the imaging device is provided, and at an upper end portion of the case 102, operation switches 106 such as a shooting start/stop switch and the like are provided. At a portion that is slightly upper side of a left-side surface in the case 102, various setting switches 108 are provided. A grip belt 110 is linked to a front portion and a back portion of a lower left-side surface of the case 102. A LCD display 105 (Fig. 8) for displaying the object image taken by the imaging device is provided on a right-side surface of the case 102.

The main body side barrel 10 includes, at a front portion thereof, a main body side inner circumferential surface 14 which takes an optical axis of the imaging optical system 12 as a center, and grooves 16 provided at a portion of the main body side inner circumferential surface 14, close to inside of the imaging optical system 12, and all periphery of the main body side inner circumferential surface 14.

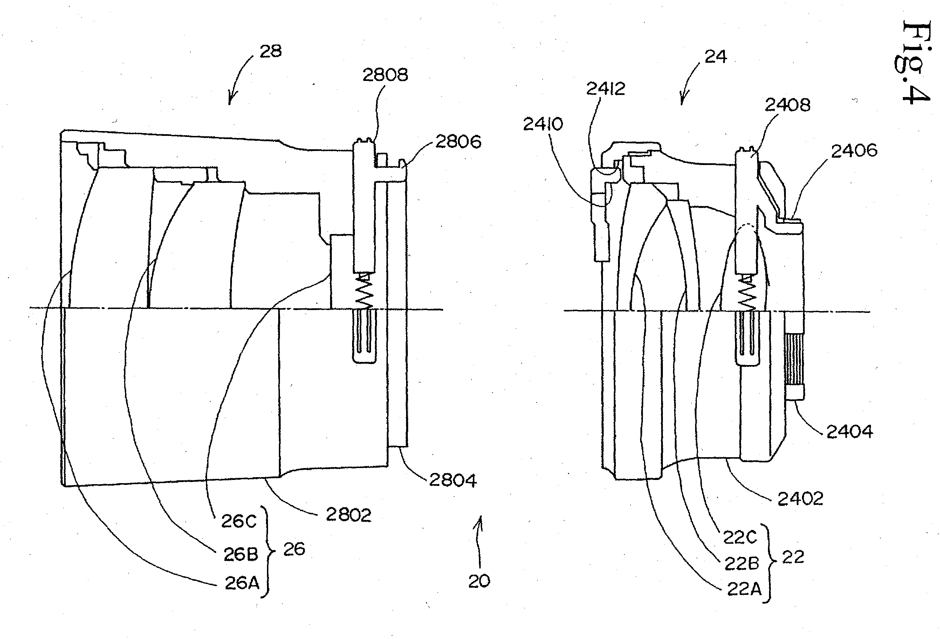

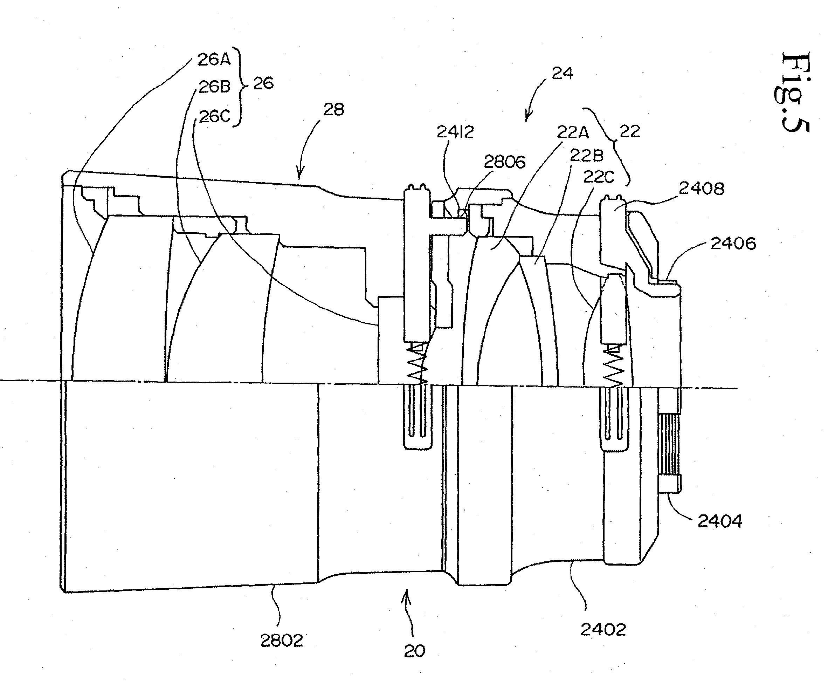

Now, a conversion lens apparatus 20 is described. As shown in Fig. 4, the conversion lens apparatus 20 includes a first lens barrel 24 which includes a first lens 22, and a second lens barrel 28 which includes a second lens 26. As shown in Fig. 4 and Fig. 5, the first lens barrel 24 includes a barrel 2402, and the first lens 22 is housed in the barrel 2402. According to the present embodiment, the first lens 22 is configured with three lenses 22A, 22B, and 22C.

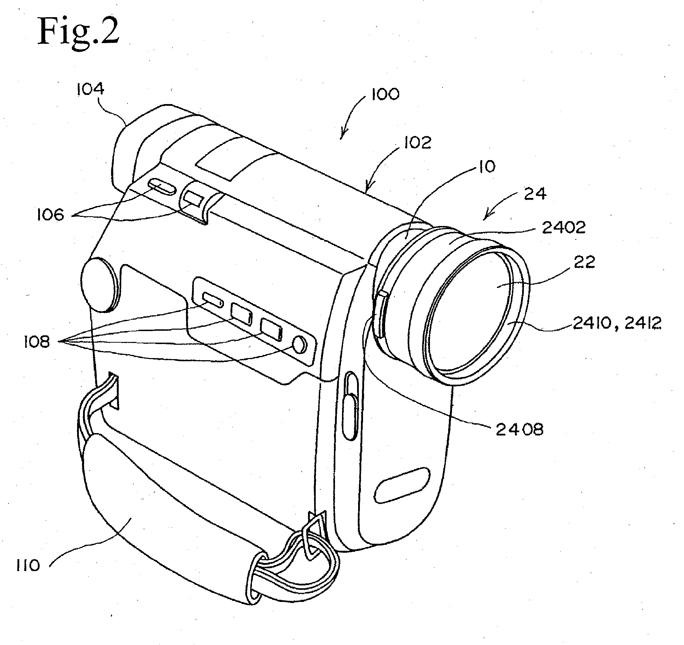

A back portion of the first lens barrel 24 is configured to be detachably attached to the main body side barrel 10, and is configured to convert the magnification rate of the total optical system including the first lens 22 and the imaging optical system 12 to be more wide-angle side than the magnification rate of the imaging optical system 12 alone as shown in Fig. 2 while in a condition where the first lens barrel 24 is attached to the front portion of the main body side barrel 10.

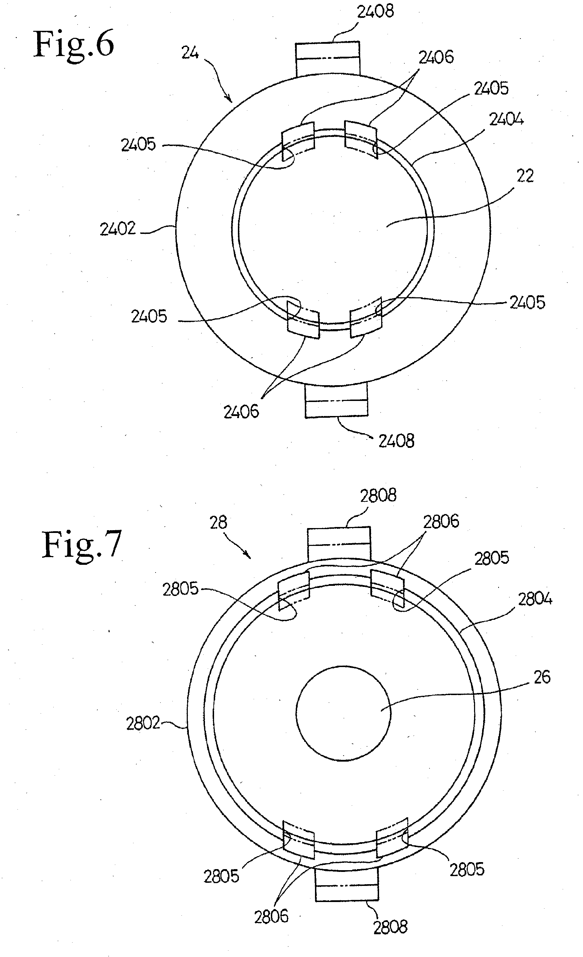

As shown in Fig. 6, at a back end of then barrel 2402, there are provided a first lens barrel side outer circumferential surface 2404 which is rotatably inserted into the main body side inner circumferential surface 14, 2 cutouts 2405 respectively provided at portions opposite to each other on the first lens barrel side outer circumferential surface 2404, and engaging pawls 2406 respectively engaging/disengaging with the groove 16 and retractable from the first lens barrel side outer circumferential surface 2404 by way of these cutouts 2405. Further, at opposed positions of the barrel 2402, the operating members 2408 are retractably provided, and these operating members 2408 are biased toward a projecting direction of the first lens 22 by a coil spring provided at an outer side portion in the radial direction, and these 2 engaging pawls 2406 are integrally formed at respective operating member 2408.

Accordingly, as shown in Fig. 6 with two-dot chain line, when the 2 operating members 2408 are pressed a central direction of the barrel 2402, each engaging pawl 2406 is buried inside of the first lens barrel side outer circumferential surface 2404, and at this time, when the pressure to the 2 operating members 2408 is released by inserting the first lens barrel side outer circumferential surface 2404 into the main body side inner circumferential surface 14, then the engaging pawl 2406 engages with the groove 16, and the first lens barrel 24 is attached to the main body side barrel 10. In addition, when the 2 operating members 2408 are pushed toward the central direction of the barrel 2402, each engaging pawl 2406 is buried inside the first lens barrel side outer circumferential surface 2404, and under this condition, the first lens barrel side outer circumferential surface 2404 is removed from the main body side inner circumferential surface 14, and the first lens barrel 24 is detached from the main body side barrel 10.

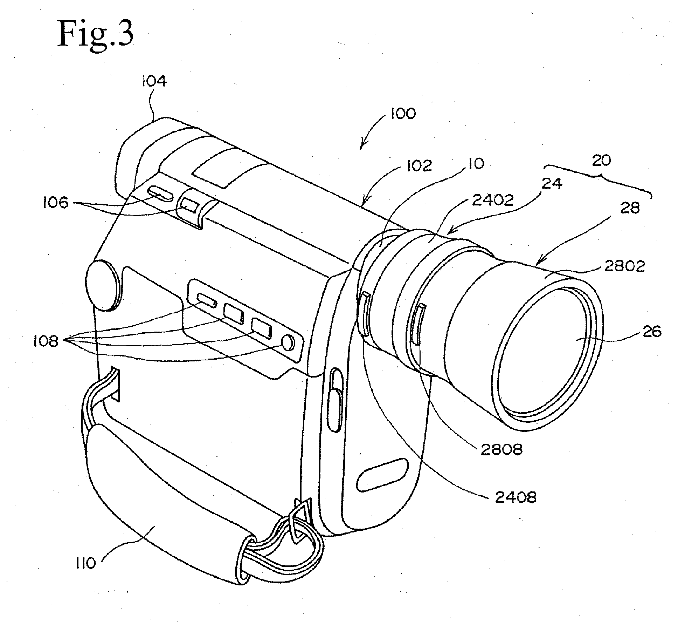

As shown in Fig. 4 and Fig. 5, a second lens barrel 28 includes a barrel 2802, and a second lens 26 is housed in the barrel 2802. According to the present embodiment of the invention, the second lens 26 is configured to have three lenses 26A, 26B, and 26C. A back portion of the second lens barrel 28 is configured to be able to detachably attached to the front portion of the first lens barrel 24, and is further configured, as shown in Fig. 3, to convert the magnification rate of the total optical system including the first lens 22, the second lens 26, and the imaging optical system 12 to be more telescopic side than the magnification rate of the imaging optical system 12 alone while in a condition where the second lens barrel 28 is attached to the front portion of the main body side barrel 10, and further attached to the front portion of the first lens barrel 24.

As shown in Fig. 7, at a back end of the lens barrel 2802, there are provided a second lens barrel side outer circumferential surface 2804 which is rotatably inserted into the first lens barrel side inner circumferential surface 2410, 2 cutouts 2805 respectively provided at portions opposite to each other of the second lens barrel side outer circumferential surface 2804, and engaging a pawl 2806 detractable from the second lens barrel side outer circumferential surface 2804 through the cutouts 2805 and engaged/disengaged with the groove s 2412. Further, the operating members 2808 are detractably provided at opposing portions of the barrel 2802, these operating members 2808 are biased toward a projecting direction by a coil spring provided at an outside portion in the radial direction of the second lens 26, and each of the engaging pawls 2806 is integrally formed with each of the operating members 2808.

Accordingly, as shown in Fig. 7 with two-dot chain line, when these 2 operating members 2808 are pressed to the central direction of the barrel 2802, each engaging pawl 2806 is buried inside the second lens barrel side outer circumferential surface 2804, and under this condition, when the second lens barrel side outer circumferential surface 2804 is inserted into the first lens barrel inner circumferential surface 2410, and when the pressure to the 2 operating members 2808 is released, then, the engaging pawls 2806 are engaged with the grooves 2412, and the second lens barrel 28 is attached to the first lens barrel 24. Further, when the 2 operating members 2808 are pressed toward the central direction of the barrel 2802, each engaging pawl 2806 is buried inside of the second lens barrel side outer circumferential surface 2804, and under this condition, the second lens barrel side outer circumferential surface 2804 is pulled out from the first lens barrel side inner circumferential surface 2410, and the second lens barrel 28 is removed from the first lens barrel 24.

The image shooting utilizing the conversion lens apparatus 20 of one embodiment of the present invention is described hereinafter. As shown in Fig. 8, there are kids 4 on a stage 2 of an auditorium in an elementary school, for example, and on an audience seats 6 of the auditorium which is apart from the stage 2 by 20 m, there are a mother 8 who is watching the stage 2 and a father who is a cameraman but not shown in the drawing. The mother 8 and the father (called as a cameraman hereinafter) are apart from each other by 1 m.

Near the cameraman, there is a tripod 200 on a camera platform of which an imaging apparatus 100 is attached. Shooting directions of the imaging apparatus 100 are able to be changed in the horizontal direction and the vertical direction with the operation by the cameraman. In case of shooting the kids 4 on the stage 2 with the imaging apparatus 100, the first lens barrel 24 is attached to the main body side barrel 10 of the imaging apparatus 100, and further the second lens barrel 28 is attached to the first lens barrel 24 in order to set a magnification rate suitable for shooting an object located far from the imaging apparatus 100, so that the magnification rate of the total optical system including the first lens 22, the second lens 26, and the imaging optical system 12 is changed to be more telescopic side than the magnification rate of the imaging optical system 12 alone. Thereby, it becomes possible to shoot the kids 4 located apart from the imaging apparatus 100 by directing the imaging apparatus 100 toward the kids 4 with an appropriate magnification rate.

In addition, in case of shooting the mother 8 sitting on the audience seats 6, the magnification rate of the total optical system including the first lens 22, and the imaging optical system 12 is converted to be more wide-angle side than the magnification rate of the imaging optical system 12 alone by detaching the second lens barrel 28 from the first lens barrel 24 in order to set a magnification rate suitable for shooting an object located close to the imaging apparatus 100. Accordingly, by directing the imaging apparatus 100 to the mother 8 while manipulating the camera platform of the tripod 200, or by a hand carry shooting while detaching the imaging apparatus 100 from the camera platform of the tripod 200, it is able to shoot the mother 8 sitting near the imaging apparatus 100 with an appropriate magnification rate.

In addition, when shooting again the kids 4 on the stage 2 by attaching the second lens barrel 28 to the first lens barrel 24, the magnification rate of the total optical system including the first lens 22, the second lens 26, and the imaging optical system 12 is converted to be more telescopic side than the magnification rate of the imaging optical system 12 alone, thereby, it is possible to shoot the kids 4 located apart from the imaging apparatus 100 with the appropriate magnification rate.

Use of the above mentioned conversion lens apparatus 20 is described in more detail. In a condition where the magnification rate of the total optical system including the first lens 22, the second lens 26, and the imaging optical system 12 is converted to be more telescopic side than the magnification rate of the imaging optical system 12 alone by the conversion lens apparatus 20, in other words, when the conversion lens apparatus 20 is used as a telescopic conversion lens, it is possible to set the magnification rate at the telescopic side of the zoom lens, etc. of the imaging apparatus 100 included in the video camera or the like, and this is suitable for a super telescopic shooting, but if the shooting is performed while carrying in hand, it is very difficult to get a stable image even with a shaking correcting function, it is common to use the tripod when shooting.

On the contrary, in a condition where the magnification rate of the total optical system including the first lens 22 and the imaging optical system 12 is converted to be more wide-angle side than the magnification rate of the imaging optical system 12 alone by the conversion lens apparatus 20, in other words, when the conversion lens apparatus 20 is used as a wide-angle conversion lens, it is possible to set the magnification rate of the zoom lens at a wide-angle side to be more wide-angle side, to perform a shooting of more stable image while carrying the imaging apparatus 100, and to be able to shoot the portrait at closer position with a proper size such as a bust shot.

Further, by attaching a pedestal having a screw for tripod to a screw hole for the tripod of the imaging apparatus, a conventional tripod is configured to be able to detachably attach to the tripod with the imaging apparatus having the pedestal. In case of shooting at a party such as an event, a wedding ceremony, and the like, a broadcast station may prepare a plurality of imaging apparatuses, shoots a stage, a bridal couple with a dedicated imaging apparatus, shoots audiences and turnouts with another imaging apparatus, and by switching these imaging apparatuses, the broadcast station creates one program by editing images having different magnification rates, but according to the present invention, it is possible to perform shootings with different magnification rates by utilizing the conversion lens apparatus 20 to a home use imaging apparatus.

Namely, if the conversion lens apparatus 20 of the present invention is attached to the imaging apparatus, the above mentioned tripod is prepared, a camera platform of the tripod is directed toward the stage and the like, the camera is fixed at the position, and the camera shoots the stage while using as a telescopic conversion lens, it is possible to perform a super telescopic shooting. Thus, if the conversion lens apparatus 20 is used as a wide-angle conversion lens by removing or detaching the second lens barrel 28 therefrom, and simultaneously shooting the audience while removing the imaging apparatus from the tripod together with the camera platform and holding the imaging apparatus by hand for hand held shooting, it also becomes possible to perform a stable close-up shooting of the portrait. After that, if the imaging apparatus is attached to the tripod, the second lens barrel 28 is attached to the first lens barrel 24, and the conversion lens apparatus 20 is used as a telescopic conversion lens, it is able to successively shoot the stage because the camera platform of the tripod is fixed while directing the predetermined direction.

According to the present invention, the conversion lens apparatus 20 is configured to be able to use as a wide-angle conversion lens as soon as the second lens barrel 28 is detached or removed, because such adaptation is considered. In addition, the portion (coupled portion) where the first lens barrel 24 and the second lens barrel 28 are attached is configured to be not a screw structure for the adaptor lens of a general imaging apparatus but a dedicated mounting structure, because such dedicated mounting structure is strong and easy in handling, the second lens barrel 28 is easily attached/detached, and further optimization of the optical characteristic in case of telescopic conversion lens and wide-angle conversion lens is easily performed.

According to the conversion lens apparatus 20 of the present embodiment of the present invention, by attaching/detaching the second lens barrel 28 itself to/from the first lens barrel 24 attached to the imaging apparatus 100, it is able to perform to change the magnification rate of the total optical system between the wide-angle side and the telescopic side, so that when the change between the wide-angle side and the telescopic side in the magnification rate of the total optical system is frequently done, for example in case of an athletic festival or a school play, the operation for the change becomes very simple.

Further, the conversion lens apparatus 20 of the present embodiment is configured with the two lens barrels including the first lens barrel 24 and the second lens barrel 28, it is possible to set the magnification rate of the wide-angle side and the magnification rate of the telescopic side to be a desired value without any restriction in the optical design.

Further, in case of housing or carrying the conversion lens apparatus 20, if the second lens barrel 28 attached to the first lens barrel 24, it is advantageous in handling without separating these two lens barrels.

Further by attaching/detaching the first lens barrel 24 to/from the main body side barrel 10 of the imaging apparatus 100, it is able to change the magnification rate of the total optical system between the wide-angle side and the telescopic side. Accordingly, in a case when an image taking is performed in a situation where an object and the imaging apparatus 100 are relatively close, and when the change between a wide-angle side and a telescopic side in the magnification rate of the total optical system is frequently done, for example in case of an interview or a home party, the operation for the change becomes very simple.

Further, because the first lens 22 of the first lens barrel 24 converts the magnification rate of the total optical system to be more a wide angle side, the first lens 22 has a relatively larger aperture in the optical design standpoint, and accordingly, an outer diameter of the front end of the first lens barrel 24 becomes a larger size. Therefore, it is possible to keep an area at the connecting portion with the front end of the first lens barrel 24 and the rear end of the second lens barrel 28, and is able to make the attachment of the second lens barrel 28 to the first lens barrel 24 more stable.

In the present embodiment, it is so configured that the attachment of the first lens barrel 24 and the main body side barrel 10 is performed by engaging the engaging pawls 2406 with the grooves 16, and the attachment of the second lens barrel 28 and the first lens barrel 24 is performed by engaging the engaging pawls 2806 with the grooves 2412, but, the attachment of the first lens barrel 24 and the main body side barrel 10, and the attachment of the second lens barrel 28 and the first lens barrel 24 may be configured to perform with male screws and female screws, or configured with other well-known mechanism.

Further, in the above mentioned embodiment, a video camera is used as an imaging apparatus, but the conversion lens apparatus of the present invention may be applied to various imaging apparatuses such as digital still cameras, television cameras, and the like.

## Claims

1. A conversion lens apparatus detachably attached to a main body side lens barrel to which an imaging optical system of an imaging apparatus for shooting an object is assembled, comprising:
a first lens barrel for housing a first lens; and
a second lens barrel for housing a second lens, wherein
a back portion of the first lens barrel is detachably attached to the main body side lens barrel;
a back portion of the second lens barrel is detachably attached to a front portion of the first lens barrel;
the first lens barrel is configured so that a magnification rate of a total optical system including the first lens and the imaging optical system is converted to be more wide-angle side than a magnification rate of the imaging optical system itself, when attached to the front portion of the main body side lens barrel; and
the second lens barrel is configured so that the magnification rate of the total optical system including the first lens and the imaging optical system is converted to be more telescopic side than a magnification rate of the imaging optical system itself, when attached to the front portion of the first lens barrel which is attached to the front portion of the main body side lens barrel.

2. The conversion lens apparatus as cited in claim 1, wherein the main body side lens barrel includes;
at a front end thereof, a main body side inner circumferential surface which takes an optical axis of the imaging optical system as a center; and
grooves provided at a portion of the main body side inner circumferential surface, close to inside of the imaging optical system, and all periphery of the main body side inner circumferential surface, wherein;
there are provided with a first lens barrel side outer circumferential surface to be rotatably inserted into the main body side inner circumferential surface, and engaging pawls retracted from the first lens barrel side outer circumferential surface and engaged with the grooves at a back end of the second lens barrel; and
the second lens barrel is attached to the first lens barrel by inserting the first lens barrel side outer circumferential surface into the main body side inner circumferential surface, and by engaging the engaging pawls with the grooves.

3. The conversion lens apparatus as cited in claim 1, wherein the first lens barrel includes;
at a front end thereof, a first lens barrel side inner circumferential surface which takes an optical axis of the first lens as a center; and
grooves provided at a portion close to inside of the first lens of the first lens barrel side inner circumferential surface, wherein;
there are provided with, at a back end of the second lens barrel, a second lens barrel side outer circumferential surface to be rotatably inserted into the first lens barrel side inner circumferential surface, and engaging pawls retracted from the second lens barrel side outer circumferential surface and engaged with the grooves; and
the second lens barrel is attached to the first lens barrel by inserting the second lens barrel side outer circumferential surface into the first lens barrel side inner circumferential surface, and by engaging the engaging pawls with the grooves.
